# EUROPEAN PATENT SPECIFICATION

(11) **EP 2 897 418 B1**
(45) Date of publication and mention of the grant of the patent: **01.06.2016**
(21) Application number: 14305073.0
(22) Date of filing: 20.01.2014
(51) Int. Cl.: H04W 48/08

(54) **Advertising storage capabilities accessible via a wireless local area network**
Bekanntgabe von über ein drahtloses lokales Netzwerk zugänglichen Speicherkapazitäten
Annoncer des capacités de stockage accessibles via un réseau local sans fil

(43) Date of publication of application: 22.07.2015
(73) Proprietor: ALCATEL LUCENT, 92100 Boulogne-Billancourt (FR)
(72) Inventor: Vigoureux, Martin, 91620 NOZAY (FR); Le Pallec, Michel, 91620 NOZAY (FR)
(74) Representative: Berthier, Karine

(56) References cited:
- EP-A1- 1 530 325
- EP-A1- 2 046 084
- WO-A1-2006/000617
- US-A1- 2013 237 192

## Description

### BACKGROUND OF THE INVENTION

### Field of the invention

The present invention generally relates to the wireless local area networks, for instance those standardized in the standard family IEEE 8502.11x (x being 'b', 'g', 'n', 'ac', etc) and marketed under the name WiFi.

Network attached storages are today being more and more deployed in WiFi wireless local area networks, these networks offering open access (e.g. hotspots in public places) or offering community-restricted access (e.g. access restricted to subscribers of a given Internet Service Provider). Also, more and more, residential home and small-office/home-office gateways are providing both WiFi access and storages,

However the capabilities (presence, availability, capacity, etc) of storage resources/devices, accessible through a given Wifi access point, are not known a priori by the users that would be allowed to connect to this WiFi access point. Only the owner and/or administrator of this WiFi access point, or the owner and/or administrator of the local area network behind it, has this knowledge.

### Description of the prior art

A possible solution could be to advertise, by means of an independent medium, the existence and capabilities of storage resources/devices accessible through a given WiFi access point. As an illustrative example, once connected to a WiFi access point, a user, opening his/her browser, could be prompted by a page describing the capabilities of storage resources/devices accessible via this access point. However, this solution has a drawback: It is not possible to know the storage capabilities without being already connected to the related WiFi access point. This is particularly cumbersome in the how quite common situation where multiple WiFi networks are available at a given place. In such a situation, a user would have to connect to (and disconnect from) the various WiFi networks to discover their respective storage capabilities.

Thus, there is a need to provide a better technical solution for advertising the capabilities of storage resources/devices that are accessible via a wireless local area network.

This can be solved by applying, the method according to the invention.

Attention is drawn to the document EP 1 530 325 A1.

### SUMMARY OF THE INVENTION

A first object of the invention is a method for advertising capabilities of at least one storage resource accessible via a wireless local area network comprising at least one wireless access point this wireless access point periodically transmitting a beacon frame containing a wireless local area network identifier designating this network;
characterized in that it comprises the step of inserting, in beacon frames transmitted by a wireless access point, data describing the capabilities of at least one storage accessible via the wireless local area network designated by this wireless local area network identifier.

Thanks to the combination, within a beacon frame, of the wireless local area network identifier designating a network and of the data describing the storage capabilities attached to this network, a terminal is able to identify storage capabilities attached to the neighboring wireless network without the need to establish any prior connection to these wireless networks. When several wireless local area networks are available, with respective attached storage resources, a terminal can advantageously select the wireless network presenting the best matching between network resources, including storage resources, and client objectives in terms of remote storage service.

A second object of the invention is a wireless access point for implementing the method according to the invention.
A third object of the invention is a wireless terminal for implementing the method according to the invention.

Other features and advantages of the present invention will become more apparent from the following detailed description of embodiments of the present invention, when taken in conjunction with the accompanying drawing

### BRIEf DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 represents exemplary wireless local area networks where the method according to the invention is applied.
- Figure 2 represents the generic format of an information element according to the standard family IEEE802.11x.
- Figure 3 represents the generic format of a peculiar information element that is specific to a vendor, according to the standard family IEEE802.11x.
- Figure 4 represents the generic format of a sub-element, according to the standard family IEEE802.11x.
- Figure 5 represents the format of a newly defined storage capability advertising information element, according to a first embodiment of the method according to the invention.
- Figure 6 represents the format of a newly defined storage capability advertising information element, according to a second embodiment of the method according to the invention.

### DETAILED DESCRIPTION OF THE PREFERRED EMBODIMENTS

The following description of embodiments focuses on the WiFi technology, but the method according to the invention can also apply to other kinds of wireless networks especially wireless networks that are non-subscriber-based with a limited-coverage

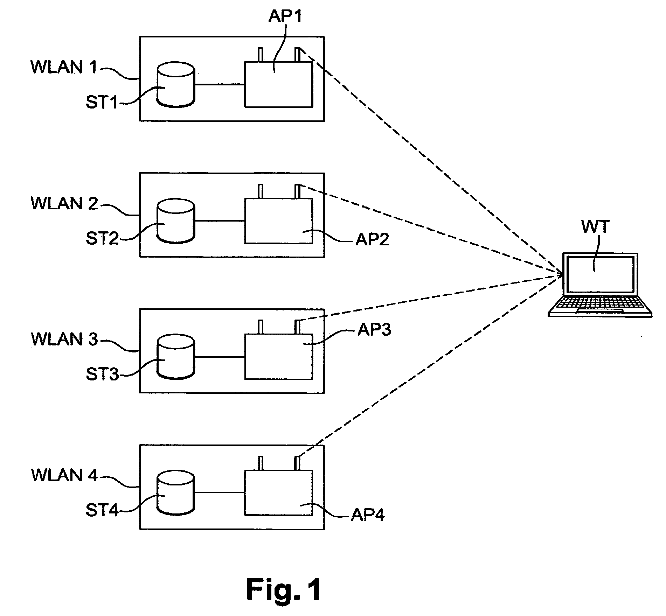

**Figure 1** represents four exemplary wireless local area netvrorks WLAN1, WLAN2, WLAN3, WLAN4, where the method according to the invention is applied. The wireless local area network WLAN1 comprises an access point AP1 and a storage ST1. The wireless local area network WLAN2 comprises an access point AP2 and a storage ST2. The wireless local area network WLAN3 comprises an access point AP3 and a storage ST3. The wireless local area network WLAN4 comprises an access point AP4 and a storage ST4. These local area networks comprise other network elements that are classical and not represented on this figure.
An exemplary wireless terminal WT, according to the invention, is within the connectivity area of the four access points AP1, ..., AP4 in this example. The wireless terminal WT may be a personal computer, a smartphone, etc, comprising a WiFi adapter/receiver.
WiFi technologies are defined and specified by the standard family lEEE802.11x. This IEEE standard family defines a "beacon frame" which is periodically sent by each of the WiFi access points of a wireless network. This beacon frame advertises information related to the wireless network WLAN. In particular, it classically contains a wireless local area network identifier designating this wireless network WLAN. According to the standard family IEEE 802.11x, the beacon frame may also contain several "information elements", of various respective lengths.

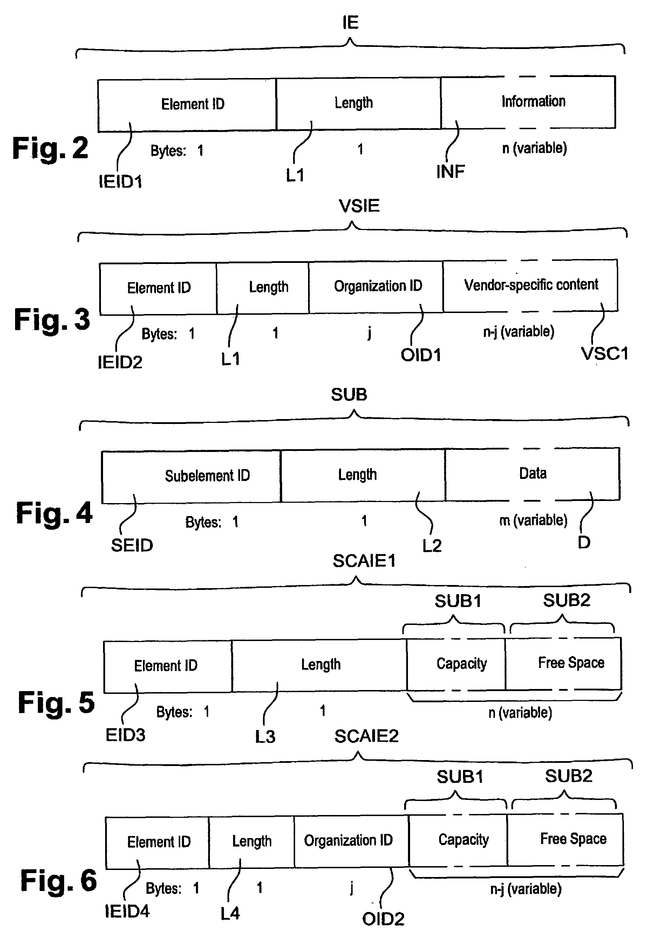

**Figure 2** represents the generic format of an information element according to the standard family IEEE802.11x:
- A header of one byte (Eight bits) represents the identity IEID1 of the information element. It has a value chosen from 0 to 255.
- One byte represents the length L1 of the information element.
- A variable number n of bytes carrying data that may represent any kind of information INF.

**Figure 3** represents the generic format of a peculiar type of information element, an information element that is specific to a vendor, according to the standard family IEEE802.11x:
- A peculiar header of one byte represents the identity IE1D2 of this kind of information element: the standard sets its value at 221 for any vendor.
- One byte represents the length L2 of this information element.
- The n bytes carrying data comprise:
   -- j bytes representing an organization identifier OID1, this organization identifier generally designating a vendor.
   -- and n-j bytes of data representing some vendor specific content VSC.

According to the standard family IEEE802.11x, any information element may contain one or several "information sub-elements" among the bytes carrying information, INF or VSC.

**Figure 4** represents the generic format of a sub-element, SUB, according to the standard family IEEE802.11x. It comprises:
- A header of one byte that is the identifier SEID of the sub-element. This sub-element identifier SEID is relevant only in the context of a given information element.
- One byte represents the length L2 of the sub-element.
- A variable number m of bytes carrying data D.

In this example, the method according to the invention comprises the step of inserting, in each beacon frame transmitted by the wireless access point AP1, data describing the capabilities of at least one storage, such as the storage ST1, accessible via the wireless local area network WLAN1 designated by the wireless local area network identifier classically carried by this beacon frame.
Similarly data describing the capabilities of the storage ST2, ST3, ST4 are inserted in each beacon frame transmitted by the wireless access point AP2, AP3:, and AP4 respectively.
In other examples, data describing the capabilities of at least one storage is inserted in each beacon frame out of k beacon frames, k being equal to 2, or 3, etc.
When the method according to the invention is applied to WiFi wireless networks, the data describing the capabilities of at least one storage are inserted in a newly defined information element, within a WiFi beacon frame. More precisely, the capabilities are represented by data carried inside at least one sub-element embedded in this newly defined information element.

Two embodiments of this newly defined information element, within a WiFi beacon frame, can be considered:
1) The first one should be used if the format of this newly defined information element is standardized in the future.
2) The second embodiment should be used if the format of this newly defined information element is not standardized in the future.

**Figure 5** represents the format the first embodiment SCAIE of the newly defined information element. It is similar to the generic information element IE represented on Figure 2. It comprises:
- A header, of one byte, that is the same for all the information elements carrying information about storage capabilities. This header has a specific value EID3 that will be chosen between 0 and 255, and that is supposed to be standardized in the future. This standardized specific value will enable recognizing any information element that advertises storage capabilities. So any terminal compliant with the future standard will be able to recognize an information element advertising storage capabilities, by detecting this header.
- One byte that represents the length L3 of this information element.
- A sub-element SUB1 that contains the value of the total storage space of the wireless network, i. e. the capacity of the storage ST in the example of Figure 1. This sub-element is similar to the sub-element represented on Figure 4. It comprises a specific header (not represented) indicating that it carries the value of the total storage space.
- A sub-element SUB2 contains the value of the free storage space of the wireless network, i. e. the free space of the storage ST in the example of Figure 1. It is similar to the sub-element represented on Figure 4. it comprises another specific header (not represented) indicating that it carries the value of the free storage space.

**Figure 6** represents the format the second embodiment SCAIE2 of the newly defined information element. It should be used if no specific header is standardised for all the information elements carrying information about storage capabilities, in the future. It is similar to the generic vendor specific information element VSIE represented on Figure 2, except that the vendor specific content is specific. It comprises:
- A header EID2 having the value 221 already standardised for the vendor specific information elements;
- One byte represents the length L4 of this information element.
- The n bytes carrying data comprise:
   -- j bytes representing an organisation identifier OID2, this organization identifier generally designating a vendor. Only the wireless terminals that will be configured for recognizing the specific organization identifier OID2 will be able to exploit this information element SCAIE2.
   -- and n-j bytes comprising a sub-element SUB1 advertising the capacity of the storage ST, and a sub-element SUB2 advertising the free space of the storage ST.

According to the invention, the data carried by a sub-element represent at least one of one of the capabilities of the storage or storages accessible via the access point that transmits the information element that comprises this sub-element. These capabilities may be:
- The total storage space of the storage ST (expressed in bytes).
- The free storage space of the storage ST (expressed in bytes),
- The file system of the storage ST (e.g. FAT, FAT32, extFAT, NTFS, ext2, ext3, ...)
- The type of the storage space ST (public/shared or private).
- The duration a file can be hosted in the storage ST before being automatically removed. - The access time (expressed in seconds).
- The input/output throughput (reading/writing speed in bytes/second)
- etc.

In this embodiment, the transmitted capabilities are limited to the total storage space and the free storage space of the storage ST. Of course, in other embodiments, a storage capability advertising information element may contain more or less capabilities. Preferably, a storage capability advertising information element comprises one distinct sub-element for each storage capability.

The choice of the capabilities that are advertised in the beacon frame is a trade off: On the one hand, the beacon frames must not be overloaded by the data representing these storage capabilities. On the other hand, the advertised capabilities must be sufficient for enabling a relevant choice of a wireless network. The advertised capabilities are chosen so that they enable a user or a software module, to efficiently select the best wireless network among several available wireless networks, and then connect to it. Additionally to wireless transmission capabilities, the storage capabilities are taken into account for selecting the wireless network meeting user/client, expectations in terms of (storage) service.

If a wireless network comprises several distinct storages, a sub-element preferably carries the total -preferably free- storage space that is accessible via the wireless network.

The owner(s) or administrator(s) of the different WiFi access points AP1,..., AP4 configures all these access points AP1,..., AP4 for periodically transmitting a beacon frame comprising the information element SCAIE1 or SCAIE2, in the same way as he/she classically configures the access points for transmitting a beacon frame comprising classical WiFi parameters such as the identifier of the wireless network.
For taking into account load balancing strategies between storage resources or for imposing some priority attributes, the owner(s) or administrator(s) of the WiFi access points AP1,..., AP4 may limit the value representing the (free) storage capacity, in order to advertise only a part of the storage resources to WiFi clients.

The embodiment WT of the wireless terminal according to the invention comprises a processor that runs client software configured for implementing the method according to the invention, i.e. doing the following steps:
- Receiving a beacon frame in the wireless terminal WT;
- Extracting a wireless local network identifier, from the received beacon frame. it designates one of the networks WLAN1, WLAN2, WLAN3, and WLAN4 in the example of Figure 1.
- Recognizing, in each beacon frame, one or several information element carrying information about storage capabilities. It may be either one of the two information elements SCAIE1, SCAIE2 described with reference to the figures 5 and 6.
- Extracting, from the information element(s) carrying information about storage capabilities, the sub-elements describing storage capabilities.

In the example of figure 1, the sub-elements extracted from the beacon frame transmitted by the access point AP1 describe the capabilities of storage ST1 attached to the wireless network WLAN1. The sub-element extracted from the beacon frame transmitted by the access point AP2 are describing the capabilities of storage ST2 attached to the wireless network WLAN2. The sub-elements extracted from the beacon frame transmitted by the access point AP3 are describing the capabilities of storage ST3 attached to the wireless network WLAN3. The sub-elements extracted from the beacon frame transmitted by the access point AP4 are describing the capabilities of storage ST4 attached to the wireless network WLAN4.

For the step of recognizing, in the beacon frame, an information element carrying information about storage capabilities, two cases must be distinguished:
1) If a specific header is standardised, in the future, for all the information elements carrying information about storage capabilities, it consists in recognizing this specific header IEID 3.
2) If no specific header is standardised, in the future, for all the information elements carrying information about storage capabilities, it consists in:
   -- Recognizing the specific header IEID4 (value 221) already standardized for all the vendor specific information elements.
   -- Then, if it has been recognized as a vendor specific information element, then recognizing a given organization identifier OID2 in this information element.

In both cases information sub elements are used for depicting storage capabilities.

In a first embodiment of the terminal, the client software displays the storage capabilities for each accessible wireless local area network WLAN1, WLAN2, WLAN3, WLAN4, and prompts the user to choose one of them. The user manually selects one wireless local area network.
In a second embodiment of the terminal, the client is configured for automatically selecting one wireless local area network as a function of both advertised wireless transmission capabilities and advertised information about the respective storage capabilities of these wireless local area networks.

After the selection of a wireless local area network, client software connects the terminal WT to the selected wireless local area network. The connection is set up via one of the access points corresponding to the selected wireless local area network. Client software may request additional information about the storage capabilities, in a classical way, i. e. after connecting to the selected wireless local area network. For instance, if the local area WLAN4 has been selected, and if the beacon frames transmitted by the access point AP4 advertise only the value of the total storage space of the wireless local area network WLAN4, then the client may send a request, in order to request the value of the free storage space in the wireless local area network WLAN4, after connecting the terminal WT to the access point AP4.

The invention enables advertising storage capabilities before any connection. Nevertheless, after connecting the terminal to the selected network, an authorization step may still be applied for accessing to the storage resources of the selected network.

## Claims

1. A method for advertising capabilities of at least one storage (ST) accessible via a wireless local area network (WLAN1) comprising at least one wireless access point (AP1), this wireless access point periodically transmitting a beacon frame containing a wireless local area network identifier designating this network;
**characterized in that** it comprises the step of inserting, in beacon frames transmitted by a wireless access point (AP1), data describing the capabilities of at least one storage (ST1) accessible via the wireless local area network (WLAN1) designated by this wireless local area network identifier.

2. Method according to claim 1, further comprising the steps of:
- receiving a beacon frame in a wireless terminal (WT);
- extracting the wireless local area network identifier designating this network;
- and extracting, from the received beacon frame, data describing the capabilities of a storage (ST1) accessible via the wireless local area network (WLAN1).

3. Method according to claim 1, wherein the wireless local area network (WLAN1) complies with the standard family IEEE802.11; and this method comprising the step of carrying data, describing the capabilities of at least one storage (ST1), in at least one sub-element of an information element as specified by the standard family IEEE802.11x.

4. Method according to claim 1, wherein the data carried by a sub-element represent at least one of the following capabilities of at least one storage (ST1) accessible via the access point (AP1):
- the total storage space of this storage,
- the free storage space,
- the file system of this storage,
- the type of this storage,
- the duration a file can be hosted before being automatically removed from this storage,
- the access time,
- the input/output throughput.

5. **An access** point (AP1), for a wireless local area network, comprising a processor configured for:
- storing a wireless local area network identifier;
- and for inserting this stored wireless local area network identifier in each beacon frame transmitted by this wireless access point;
**characterized in that** this processor is also configured for:
- storing data describing the capabilities of at least one storage accessible via the wireless local area network designated by this wireless local area network identifier,
- and for inserting, in beacon frames transmitted by this wireless access point, the stored data describing the capabilities of at least one storage accessible via the wireless local area network designated by this wireless local area network identifier.

6. An access point (AP1) according to claim 5, for a wireless local area network complying, with the standard family IEEE802.11x, comprising a processor configured for inserting data, describing the capabilities of at least one storage (ST1), in at least one sub-element of an information element according to the standard family IEEE802.11x.

7. A wireless terminal (WT), **characterized in that** it comprises a processor configured for:
- receiving a beacon frame transmitted by at wireless access point (AP1, ..., AP4) of a wireless local area network (WLAN);
- and extracting a wireless local area network identifier, from the received beacon frame,
**characterized in that** the processor is also configured for:
- recognizing, in the beacon frame, data (SCAIE1; SCAIE2) carrying information about storage capabilities,
- and extracting, from the recognized data, the information about storage capabilities.

8. A wireless terminal according to the claim 7, compliant with the standard family IEE802.11x, wherein,
- for recognizing data (SCAIE1) carrying information about storage capabilities, the processor is configured for detecting, in the beacon frame, an information element (SCAIE1) having a header the value of which is specific for all the information elements advertising storage capabilities;
- and wherein, for extracting, from the recognized data, the information about storage capabilities, the processor is configured for extracting this information from sub-elements (SUB1, SUB2) carried by the detected information element (SCAIE1).

9. A wireless terminal according to the claim 7, compliant with the standard family IEEE802.11x, wherein,
- for recognizing data (SCAIE2) carrying information about storage capabilities, the processor is configured for:
-- detecting, in the beacon frame, an information element (SCAIE2) having a header the value of which is specific for all the information elements carrying vendor specific content,
-- and detecting in the detected information element (SCAIE2), a predetermined organization identifier;
- and wherein, for extracting, from the recognized data, the information about storage capabilities, the processor is configured for extracting this informations from sub-elements (SUB1; SUB2) carried by the detected information element (SCAIE2).

10. A wireless Terminal according to claim 7, wherein the processor is further configured for automatically selecting a wireless local area network among several wireless local area networks, as a function of advertised information about the respective storage capabilities of these wireless local area networks.

11. A computer program product for an access point (AP1), for a wireless local area network, comprising computer-executable instructions for performing the steps of:
- storing a wireless local area network identifier designating this wireless local area network,
- and for inserting, in each beacon frame transmitted by this wireless access point, the stored wireless local area network identifier;
**characterized in that** it further comprises computer-executabte instructions for performing the steps of:
- storing data describing the capabilities of at least one storage (ST1) accessible via the wireless local area network (WLAN1) designated by this wireless local area network identifier,
- and for inserting, in beacon frames transmitted by this wireless access point, stored data describing the capabilities of at least one storage (ST1) accessible via a wireless local area network designated by this wireless local area network identifier.

12. A computer program product according to claim 11, for a wireless local area network (WLAN1) complying with the standard family IEEE802.11x, comprising computer-executable instructions for performing, when the program is run on a computer, the step of inserting data, describing the capabilities of at least one storage (ST), in at least one sub-element of an information element according to the standard family IEEE802.11x.

13. A computer program product for a wireless terminal (WT), comprising computer-executable instructions for performing, when the program is run on a computer, the steps of:
- receiving a beacon frame in the wireless terminal (WT);
- extracting, from the received beacon frame, a wireless local area network identifier designating the wireless local area network;
**characterized in that** it further comprises computer-executable instructions for performing the steps of extracting, from the received beacon frame, data describing the capabilities of a storage (ST) accessible via the wireless local area network (WLAN) designated by the extracted wireless local area network identifier.

14. A computer program product according to claim 13, for a wireless terminal compliant with the standard family iEEE802.11x, comprising computer-executable instructions for performing, when the program is run on a computer, the steps of:
- recognizing data (SCAIE1) carrying information about storage capabilities, the processor is configured for detecting, in the beacon frame, an information element (SCAIE1) having a header the value of which is specific for all the information elements advertising storage capabilities;
- and extracting, from the recognized data, the information about storage capabilities, the processor is configured for extracting this information from sub-elements (SUB1, SUB2) carried by the detected information element (SCAIE1).

15. A computer program product according to claim 13, for a wireless terminal compliant with the standard family IEEE802.11x, comprising computer-executable instructions for performing, when the program is run on a computer, the steps of:
- recognizing data (SCAIE2) carrying information about storage capabilities, the processor is configured for:
-- detecting, in the beacon frame, an information element (SCAIE2) having a header the value of which is specific for all the information elements carrying vendor specific content,
-- and detecting in the detected information element (SCAIE2), a predetermined organization identifier;
- and extracting, from the recognized data, the information about storage capabilities, the processor is configured for extracting this information from sub-elements (SUB1, SUB2) carried by the detected information element (SCAIE2).

## Patentansprüche

1. Verfahren für Anzeigefähigkeiten von zumindest einem über ein drahtloses, lokales Netzwerk (WLAN1) mit mindestens einer drahtlosen Zugangsstelle (AP1) zugänglichen Speicher (ST), wobei diese Zugangsstelle regelmäßig einen Beacon-Frame überträgt, der eine dieses Netzwerk bezeichnende WLAN-Kennung umfasst, **dadurch gekennzeichnet, dass** sie den Schritt umfasst, Daten in von einer drahtlosen Zugangsstelle (API) übermittelten Beacon-Frames einzuführen*, wobei diese Daten die 10 Fähigkeiten beschreiben, auf die von zumindest einem, über ein drahtloses lokales Netzwerk (WLAN1) zugänglichen Speicher (ST1) zugegriffen werden kann, wobei das Netzwerk von der Kennung dieses drahtlosen lokalen Netzwerks bestimmt wird.

2. Verfahren nach Anspruch 1, **dadurch gekennzeichnet, dass** es weitere Schritte umfasst:
- Aufnahme eines Beacon-Frames in einem drahtlosen Endgerät (WT);
- Extraktion der Kennung des drahtlosen lokalen Netzwerks, die dieses Netzwerk bestimmt und
- Datenextraktion aus dem empfangenen Beacon-Frame, wobei diese Daten die Fähigkeiten eines Speichers (ST1) beschreiben, der über das drahtlose lokale Netzwerk (WLAN1) zugänglich ist.

3. Verfahren nach Anspruch 1, **dadurch gekennzeichnet, dass** das drahtlose lokale Netzwerk (WLAN1) der Standardfamilie IEEE8Q2.11 genügt und das Verfahren den Schritt umfasst, als Träger für Daten zu dienen, die die Fähigkeiten von mindestens einem Speicher (ST1) in mindestens einem Unterelement eines Informationselements gemäß der Spezifikation der Standardfamilie IEEE802.11x zu beschreiben.

4. Verfahren nach Anspruch 1, **dadurch gekennzeichnet, dass** die Daten auf dem Unterelementträger mindestens eine der folgenden Fähigkeiten von zumindest einem über eine Zugangsstelle (AP1) zugänglichen Speicher (ST1) repräsentieren:
- Den Gesamtspeicherplatz dieses Speichers,
- Den freien Speicherplatz,
- Das Dateisystem dieses Speichers,
- Die Art dieses Speichers,
- Die Dauer, die eine Datei gehostet werden kann, bevor sie automatisch aus diesem Speicher gelöscht wird,
- Die Zugangszeit,
- Den Datendurchsatz am Ein-/Ausgang.

5. Eine Zugangsstelle (API) für ein drahtloses lokales Netzwerk, das einen Prozessor umfasst, der konfiguriert ist zur:
- Speicherung einer Kennung eines drahtlosen lokalen Netzwerks und
- Einführung dieser gespeicherten Kennung eines drahtlosen lokalen Netzwerks in jeden von dieser drahtlosen Zugangsstelle übertragenen Beacon-Frame,
**dadurch gekennzeichnet, dass** dieser Prozessor auch für Folgendes konfiguriert ist:
- Speicherung von Daten, die die Fähigkeiten von zumindest einem Speicher beschreiben, der über ein drahtloses lokales Netzwerk, das von der Kennung dieses drahtlosen lokalen Netzwerks bestimmt wird, zugänglich ist, und
- Einführung von Daten, die die Fähigkeiten von zumindest einem Speicher beschreiben, der über ein drahtloses lokales Netzwerk, das von der Kennung dieses drahtlosen lokalen Netzwerks bestimmt wird, zugänglich ist, in von dieser drahtlosen Zugangsstelle übertragenen Beacon-Frames.

6. Zugangsstelle (AP1) nach Anspruch 5, **dadurch gekennzeichnet, dass** das drahtlose 25 lokale Netzwerk der Standardfamilie IEEE802.11x genügt und einen Prozessor umfasst, der zur Einführung von Daten konfiguriert ist, die die Fähigkeiten von mindestens einem Speicher (ST1) in mindestens einem Unterelement eines Informationselements gemäß der Standardfamilie IEEE802.11x beschreiben.

7. Drahtloses Endgerät (WT), **dadurch gekennzeichnet, dass** es einen Prozessor umfasst, der konfiguriert ist zur:
- Aufnahme eines Beacon-Frames, der von einer drahtlosen Zugangsstelle (AP1,..., AP4) eines drahtlosen lokalen Netzwerks (WLAN) übertragen wird, und zur
- Extraktion einer Kennung eines drahtlosen lokalen Netzwerks aus dem empfangenen Beacon-Frame,
**dadurch gekennzeichnet, dass** dieser Prozessor auch für Folgendes konfiguriert ist:
- Erkennung von Daten (SCA1E1; SCAIE2) im Beacon-Frame, die Informationen zu den Speicherfähigkeiten enthalten, und
- Extraktion von Informationen zu den Speicherfähigkeiten aus den erkannten Daten.

8. Drahtloses Endgerät nach Anspruch 7, **dadurch gekennzeichnet, dass** es der Standardfamilie IEEE802.11x genügt, in dem zur
- Erfassung der Daten (SCAIE1), die Informationen zu den Speicherfähigkeiten beinhalten, einen Prozessor gibt, der zum Erfassen im Beacon-Frame ein Informationselement (SCAIE1) mit einem Header aufweist, dessen Wert für alle Informationselemente zur Ankündigung der Speicherfähigkeiten spezifisch ist, und
- zur Extraktion von Informationen zu den Speicherfähigkeiten aus den erfassten Daten der Prozessor zur Extraktion dieser Informationen aus Unterelementen (SUB1, SUB2), für die das erkannte Informationselement (SGAIE1 ) der Träger ist, konfiguriert ist.

9. Drahtloses Endgerät nach Anspruch 7, **dadurch gekennzeichnet, dass** es der Standardfamilie IEEE802.11x genügt, in dem zur
- Erfassung der Daten (SCAIE2), die Informationen zu den Speicherfähigkeiten beinhalten, der Prozessor konfiguriert ist zur:
-- Erkennung der Daten eines Informationselements (SCAIE2) mit einem Header, dessen Wert für alle Informationselemente spezifisch ist, die als Träger für zuliefererspezifischen Inhalt dienen, und
-- Erkennung einer vorher bestimmten Organisationskennung im erkannten Informationselement (SCAIE2) und
- In dem zur Extraktion von Informationen zu den Speicherfähigkeiten aus den erfassten Daten der Prozessor zur Entnahme dieser Informationen aus Unterelementen (SUB1, SUB2), für die das erkannte Informationselement (SCAIE2) der Träger ist, konfiguriert ist.

10. Drahtloses Endgerät nach Anspruch 7, **dadurch gekennzeichnet, dass** in ihm der Prozessor außerdem zur automatischen Selektion eines drahtlosen lokalen Netzwerks aus etlichen drahtlosen Netzwerken konfiguriert ist, und zwar als Funktion angekündigter Informationen zu den entsprechenden Speicherfähigkeiten dieser drahtlosen, lokalen Netzwerke.

11. Computerprogrammprodukt für eine Zugangsstelle (API) für ein drahtloses lokales Netzwerk, das durch Computer ausführbare Anweisungen zur Durchführung folgender Schritte umfasst:
- Speicherung einer Kennung eines drahtlosen lokalen Netzwerks, die dieses drahtlose lokale Netzwerk bestimmt, und
- Einführung dieser gespeicherten Kennung eines drahtlosen lokalen Netzwerks in jedem, von dieser drahtlosen Zugangsstelle übertragenem Beacon-Frame, **dadurch gekennzeichnet, dass** er außerdem durch Computer ausführbare Anweisungen zur Durchführung folgender Schritte umfasst:
- Speicherung von Daten, die die Fähigkeiten von zumindest einem Speicher (ST1) beschreiben, der über ein drahtloses lokales Netzwerk (WLAN1), das von der Kennung dieses drahtlosen lokalen Netzwerks bestimmt wird, zugänglich ist, und
- Einführung von Daten, die die Fähigkeiten von zumindest einem Speicher, der über ein drahtloses lokales Netzwerk, das von der Kennung dieses drahtlosen lokalen Netzwerks bestimmt wird, zugänglich ist, in von dieser drahtlosen Zugangsstelle übertragenen Beacon-Frames beschreiben.

12. Computerprogrammprodukt nach Anspruch 11 für ein drahtloses lokales Netzwerk (WLAN1), das der Standardfamilie IEEE802.11x genügt, das durch Computer ausführbare Anweisungen zur Durchführung der Schritte zur Einführung von Daten umfasst, wenn das Programm auf einem Computer läuft, um so die Fähigkeiten von mindestens einem Speicher (ST) in zumindest einem Unterelement eines Informationselements gemäß der Standardfamilie IEEE802.11x zu beschreiben.

13. Computerprogrammprodukt für ein drahtloses Endgerät (WT), das durch Computer ausführbare Anweisungen zur Durchführung folgender Schritte umfasst, wenn das Programm auf einem Computer läuft:
- Aufnahme eines Beacon-Frames in einem drahtlosen Endgerät (WT);
- Extraktion einer drahtlosen lokalen Netzwerk-Kennung aus dem empfangenen Beacon-Frame, wobei die Kennung das drahtlose lokale Netzwerk bestimmt, **dadurch gekennzeichnet, dass** sie außerdem durch Computer ausführbare Anweisungen zur Durchführung der Schritte zur Extraktion von Daten aus dem empfangenen Beacon-Frame umfasst, wobei diese Daten die Fähigkeiten eines Speichers (ST) beschreiben, der über ein drahtloses lokales Netzwerk (WLAN) zugänglich ist, das durch die extrahierten Kennung des drahtlosen lokalen Netzwerks bestimmt wird.

14. Computerprogrammprodukt für ein drahtloses Endgerät nach Anspruch 13, **dadurch gekennzeichnet, dass** es der Standardfamilie IEEE802.11x genügt und durch Computer ausführbare Anweisungen zur Durchführung folgender Schritte umfasst, wenn das Programm auf einem Computer läuft:
- Erfassung der Daten (SCAIE1), die Informationen zu den Speicherfähigkeiten beinhalten, wobei es einen konfigurierten Prozessor gibt, der zum Erfassen im Beacon-Frame ein Informationselement (SCAIE1) mit einem Header aufweist, dessen Wert für alle Informationselemente zur Ankündigung der Speicherfähigkeiten spezifisch ist, und
- Extraktion von Informationen zu den Speicherfähigkeiten aus den erfassten Daten, wobei der Prozessor zur Entnahme dieser Informationen aus Unterelementen (SUB1, SUB2), für die das erkannte Informationselement (SCAIE1) der Träger ist, konfiguriert ist.

15. Computerprogrammprodukt für ein drahtloses Endgerät nach Anspruch 13, **dadurch gekennzeichnet, dass** es der Standardfamilie IEEE802.11x genügt und durch Computer ausführbare Anweisungen zur Durchführung folgender Schritte umfasst, wenn das Programm auf einem Computer läuft:
- Erfassung der Daten (SCAIE2), die Informationen zu den Speicherfähigkeiten beinhalten, wobei der Prozessor konfiguriert ist zur:
-- Erkennung der Daten eines Informationselements (SCAIE2) mit einem Header, dessen Wert für alle Informationselemente spezifisch ist, die als Träger für zuliefererspezifischen Inhalt dienen, und
-- Erkennung einer vorher bestimmten Organisationskennung im erkannten Informationselement (SCAIE2) und
- Extraktion von Informationen zu den Speicherfähigkeiten aus den erfassten Daten, wobei der Prozessor zur Entnahme dieser Informationen aus Unterelementen (SUB1, SUB2), für die das erkannte Informationselement (SCAIE2) der Träger ist, konfiguriert ist.

## Revendications

1. Procédé pour annoncer des capacités d'au moins un stockage (ST) accessible via un réseau local sans fil (WLAN1) comprenant au moins un point d'accès sans fil (AP1), ce point d'accès sans fil transmettant périodiquement une trame de balise contenant un identificateur de réseau local sans fil désignant ce réseau ;
**caractérisé en ce qu'**il comprend l'étape d'insertion, dans des trames de balise transmises par un point d'accès sans fil (AP1), de données décrivant les capacités d'au moins un stockage (ST1) accessible via le réseau local sans fil (WLAN1) désigné par cet identificateur de réseau local sans fil.

2. Procédé selon la revendication 1, comprenant en outre les étapes suivantes :
- recevoir une trame de balise dans un terminal sans fil (WT) ;
- extraire l'identificateur de réseau local sans fil désignant ce réseau ;
- et extraire, de la trame de balise reçue, des données décrivant les capacités d'un stockage (ST1) accessible via le réseau local sans fil (WLAN1).

3. Procédé selon la revendication 1, dans lequel le réseau local sans fil (WLAN1) est conforme à la famille de normes IEEE802.11 ; et ce procédé comprenant l'étape d'acheminement de données, décrivant les capacités d'au moins un stockage (ST1), dans au moins un sous-élément d'un élément d'information tel que spécifié par la famille de normes IEEE802.11x.

4. Procédé selon la revendication 1, dans lequel les données acheminées par un sous-élément représentent au moins une des capacités suivantes d'au moins un stockage (ST1) accessible via le point d'accès (AP1 ) :
- l'espace de stockage total de ce stockage,
- l'espace de stockage libre,
- le système de fichiers de ce stockage,
- le type de ce stockage,
- la durée pendant laquelle un fichier peut être hébergé avant d'être supprimé automatiquement de ce stockage,
- le temps d'accès,
- le débit d'entrée/sortie.

5. Point d'accès (AP1), pour un réseau local sans fil, comprenant un processeur configuré pour :
- stocker un identificateur de réseau local sans fil;
- et pour insérer cet identificateur de réseau local sans fil stocké dans chaque trame de balise transmise par ce point d'accès sans fil ;
**caractérisé en ce que** ce processeur est également configuré pour :
- stocker des données décrivant les capacités d'au moins un stockage accessible via le réseau local sans fil désigné par cet identificateur de réseau local sans fil,
- et pour insérer, dans des trames de balise transmises par ce point d'accès sans fil, les données stockées décrivant les capacités d'au moins un stockage accessible via le réseau local sans fil désigné par cet identificateur de réseau local sans fil.

6. Point d'accès (AP1) selon la revendication 5, pour un réseau local sans fil qui est conforme à la famille de normes IEEE802.11x, comprenant un processeur configuré pour insérer des données, décrivant les capacités d'au moins un stockage (ST1), dans au moins un sous-élément d'un élément d'information selon la famille de normes IEEE802.11x.

7. Terminal sans fil (WT), **caractérisé en ce qu'**il comprend un processeur configuré pour :
- recevoir une trame de balise transmise par un point d'accès sans fil (AP1, ..., AP4) d'un réseau local sans fil (WLAN) ;
- et extraire un identificateur de réseau local sans fil, de la trame de balise reçue,
**caractérisé en ce que** le processeur est également configuré pour :
- reconnaître, dans la trame de balise, des données (SCAIE1 ; SCAIE2) acheminant des informations sur des capacités de stockage,
- et extraire, des données reconnues, les informations sur des capacités de stockage.

8. Terminal sans fil selon la revendication 7, conforme à la famille de normes IEEE802.11x, dans lequel,
- pour reconnaître des données (SCAIE1) acheminant des informations sur des capacités de stockage, le processeur est configuré pour détecter, dans la trame de balise, un élément d'information (SCAIE1) ayant un en-tête dont la valeur est spécifique pour tous les éléments d'information annonçant des capacités de stockage ;
- et dans lequel, pour extraire, des données reconnues, les informations sur des capacités de stockage, le processeur est configuré pour extraire ces informations de sous-éléments (SUB1, SUB2) acheminés par l'élément d'information (SCAIE1) détecté.

9. Terminal sans fil selon la revendication 7, conforme à la famille de normes IEEE802.11x, dans lequel,
- pour reconnaître des données (SCAIE2) acheminant des informations sur des capacités de stockage, le processeur est configuré pour :
-- détecter, dans la trame de balise, un élément d'information (SCAIE2) ayant un en-tête dont la valeur est spécifique pour tous les éléments d'information acheminant un contenu spécifique au vendeur,
-- et détecter dans l'élément d'information (SCAIE2) détecté, un identificateur d'organisation prédéterminé ;
- et dans lequel, pour extraire, des données reconnues, les informations sur des capacités de stockage, le processeur est configuré pour extraire ces informations de sous-éléments (SUB1, SUB2) acheminés par l'élément d'information (SCAIE2) détecté.

10. Terminal sans fil selon la revendication 7, dans lequel le processeur est en outre configuré pour sélectionner automatiquement un réseau local sans fil parmi plusieurs réseaux locaux sans fil, en fonction d'informations annoncées sur les capacités de stockage respectives de ces réseaux locaux sans fil.

11. Produit de programme informatique pour un point d'accès (AP1), pour un réseau local sans fil, comprenant des instructions exécutables par ordinateur pour effectuer les étapes suivantes :
- stocker un identificateur de réseau local sans fil désignant ce réseau local sans fil,
- et pour insérer, dans chaque trame de balise transmise par ce point d'accès sans fil, l'identificateur de réseau local sans fil stocké ;
**caractérisé en ce qu'**il comprend en outre des instructions exécutables par ordinateur pour effectuer les étapes suivantes :
- stocker des données décrivant les capacités d'au moins un stockage (ST1) accessible via le réseau local sans fil (WLAN1) désigné par cet identificateur de réseau local sans fil,
- et pour insérer, dans des trames de balise transmises par ce point d'accès sans fil, des données stockées décrivant les capacités d'au moins un stockage (ST1) accessible via un réseau local sans fil désigné par cet identificateur de réseau local sans fil.

12. Produit de programme informatique selon la revendication 11, pour un réseau local sans fil (WLAN1) qui est conforme à la famille de normes IEEE802.11x, comprenant des instructions exécutables par ordinateur pour effectuer, lorsque le programme est exécuté sur un ordinateur, l'étape d'insertion de données, décrivant les capacités d'au moins un stockage (ST), dans au moins un sous-élément d'un élément d'information selon la famille de normes IEEE802.11x.

13. Produit de programme informatique pour un terminal sans fil (WT), comprenant des instructions exécutables par ordinateur pour effectuer, lorsque le programme est exécuté sur un ordinateur, les étapes suivantes :
- recevoir une trame de balise dans le terminal sans fil (WT);
- extraire, de la trame de balise reçue, un identificateur de réseau local sans fil désignant le réseau local sans fil ;
**caractérisé en ce qu'**il comprend en outre des instructions exécutables par ordinateur pour effectuer les étapes d'extraction, de la trame de balise reçue, de données décrivant les capacités d'un stockage (ST) accessible via le réseau local sans fil (WLAN) désigné par l'identificateur de réseau local sans fil extrait.

14. Produit de programme informatique selon la revendication 13, pour un terminal sans fil conforme à la famille de normes IEEE802.11x, comprenant des instructions exécutables par ordinateur pour effectuer, lorsque le programme est exécuté sur un ordinateur, les étapes suivantes :
- reconnaître des données (SCAIE1) acheminant des informations sur des capacités de stockage, le processeur est configuré pour détecter, dans la trame de balise, un élément d'information (SCAIE1) ayant un en-tête dont la valeur est spécifique pour tous les éléments d'information annonçant des capacités de stockage ;
- et extraire, des données reconnues, les informations sur des capacités de stockage, le processeur est configuré pour extraire ces informations de sous-éléments (SUB1, SUB2) acheminés par l'élément d'information (SCA1E1) détecté.

15. Produit de programme informatique selon la revendication 13, pour un terminal sans fil conforme à la famille de normes IEEE802.11x, comprenant des instructions exécutables par ordinateur pour effectuer, lorsque le programme est exécuté sur un ordinateur, les étapes suivantes :
- reconnaître des données (SCAIE2) acheminant des informations sur des capacités de stockage, le processeur est configuré pour :
-- détecter, dans la trame de balise, un élément d'information (SCAIE2) ayant un en-tête dont la valeur est spécifique pour tous les éléments d'information acheminant un contenu spécifique au vendeur,
-- et détecter dans l'élément d'information (SCAIE2) détecté, un identificateur d'organisation prédéterminé ;
- et extraire, des données reconnues, les informations sur des capacités de stockage, le processeur est configuré pour extraire ces informations de sous-éléments (SUB1, SUB2) acheminés par l'élément d'information (SCAIE2) détecté.
